# EUROPÄISCHE PATENTANMELDUNG

(11) **EP 1 531 205 A2**
(43) Veröffentlichungstag der Anmeldung: **18.05.2005**
(21) Anmeldenummer: 04026046.5
(22) Anmeldetag: 03.11.2004
(51) Int. Cl.: E03C 1/042

(54) **Rosette für Wasserarmaturen**

(30) Priorität: 13.11.2003 DE 10353177
(71) Anmelder: Grohe Water Technology AG & Co. KG, 58675 Hemer (DE)
(72) Erfinder: Heupel, Norbert, 59872 Meschede (DE); Weiss, Martin, 58239 Schwerte (DE)

(57) **Zusammenfassung**

Bei einer Rosette für Wasserarmaturen, welche aus einem Abdeckkörper (1) und einem Dekorkörper (2) besteht und bei der der Dekorkörper (2) mit wenigstens einem Zapfen (20) an dem Abdeckkörper (1) lösbar befestigt ist, wobei der Abdeckkörper (1) mit wenigstens einer Schraube (3) an einer Installationswand oder einer Wasserarmatur befestigt ist und die wenigstens eine Schraube (3) von dem Dekorkörper (2) verdeckt ist, ist vorgeschlagen, dass an dem Abdeckkörper (1) für jeweils einen Zapfen (20) ein klammerartiges Federelement (4) vorgesehen ist, das mit wenigstens einem Federschenkel (40) in der Stecklage an einer parallel zur Steckrichtung verlaufenden Seitenfläche des Zapfens (20) zur federnden Anlage gelangt und durch Reibschluss den Dekorkörper (2) in der jeweiligen Stecklage hält.

## Beschreibung

Die Erfindung betrifft eine Rosette für Wasserarmaturen, insbesondere für Unterputzwasserarmaturen, welche aus einem Abdeckkörper und einem Dekorkörper besteht und bei der der Dekorkörper mit wenigstens einem Zapfen an dem Abdeckkörper lösbar befestigt ist, wobei der Abdeckkörper mit wenigstens einer Schraube an einer Installationswand oder einer Wasserarmatur befestigt und die Schraube von dem Dekorkörper verdeckt ist.

Aus der deutschen Offenlegungsschrift DE 40 35 911 A1 ist eine derartige Rosette bekannt. Hierbei ist als Dekorkörper eine Zierplatte vorgesehen, die mit druckknopfartigen Zapfen am Zentralbereich einer am Außenrand mit einem umlaufenden Wulst versehenen Abdeckkörper oder Abdeckplatte befestigbar ist. Dabei ist jedoch der Abdeckkörper mit seinem Außenrand sichtbar und erfordert somit eine entsprechende Oberflächenveredelung.
Beim Einsatz eines Dekorkörpers, der den Abdeckkörper verdeckt, besteht die Gefahr, dass bei der Anmontage an der Installationswand, zum Beispiel verursacht von Wandunebenheiten, unerwünschte Spannungen in dem Dekorkörper erzeugt werden können, die dem Dekor abträglich sind.

Der Erfindung liegt die Aufgabe zugrunde, die Befestigung des Dekorkörpers an dem Abdeckkörper zu verbessern. Hierbei gehört es mit zur Aufgabe den Dekorkörper so auszubilden, dass er verspannungsarm aber trotzdem sicher im Bereich der Installationswand angeordnet werden kann.

Diese Aufgabe wird erfindungsgemäß bei einer Rosette mit den Merkmalen des Oberbegriffs des Anspruchs 1 dadurch gelöst, dass an dem Abdeckkörper für jeweils einen Zapfen ein klammerartiges Federelement vorgesehen ist, dass mit wenigstens einem Federschenkel in der Stecklage an einer parallel zur Steckrichtung verlaufenden Seitenfläche des Zapfens zur federnden Anlage gelangt und durch Reibschluss den Dekorkörper in der jeweiligen Stecklage hält.
Weitere Ausgestaltungen der Erfindung sind in den Ansprüchen 2 bis 14 angegeben.

Durch die Anordnung der klammerartigen Federelemente an dem Abdeckkörper kann der Dekorkörper jeweils entsprechend der individuellen Anlagefläche an der Installationswand mit seinen Zapfen spannungsfrei fixiert werden.
In einer bevorzugten Ausbildung der Erfindung weist das Federelement zwei gegenüberliegende Federschenkel für die Fixierung auf, so dass der zugehörige Zapfen des Dekorkörpers von zwei gegenüberliegenden Seiten den gleichen Druckkräften der Federschenkel ausgesetzt ist und ein unerwünschtes Biegeelement weitgehend ausgeschlossen werden kann.
In weiterer Ausgestaltung der Erfindung kann das Federelement als separates Teil, vorzugsweise aus nicht rostendem Stahl, hergestellt und jeweils in einer Öffnung des Abdeckkörpers fixiert werden.
Die Befestigung des Federelementes kann zweckmäßig mit den Federschenkeln erfolgen, wobei die Federschenkel an einer Basisplatte mit einem zur Öffnung in dem Abdeckkörper größeren Querschnitt angeformt sind und die Federschenkel so ausgebildet sind, dass in der Stecklage eine Verrastung des Federelements an dem Abdeckkörper erfolgt. Zur Verrastung können die Federschenkel an beiden Seiten mit Ausnehmungen versehen werden, so dass der durch die Ausnehmung getrennte Teil des Federschenkels jeweils eine vorstehende Nase bildet, die beim Einsprengen des Federelements in eine Öffnung des Abdeckkörpers eine formschlüssige Verriegelung in der Stecklage bewirken.
Vorteilhaft können die Öffnungen im Abdeckkörper mit einem quadratischen oder insbesondere rechteckigen Querschnitt versehen werden, wobei dann die Federschenkel am Federelement entsprechend parallel zu den Seitenwänden auszubilden sind und so die Federelemente in vorgegebenen Drehstellungen in dem Abdeckkörper gehalten sind. Hierbei werden zweckmäßig drei mit Abstand zueinander angeordnete Öffnungen in dem Abdeckkörper vorgesehen, wobei zwei der Öffnungen parallel zueinander anzuordnen sind, während die dritte Öffnung um 90° gedreht zu den andern beiden zu positionieren ist, wodurch eine besonders günstige Halterung des Dekorkörpers bewerkstelligt werden kann.

Die an dem Dekorkörper vorgesehenen Zapfen werden in der Länge vorteilhaft so dimensioniert, dass der Dekorkörper in erheblich unterschiedlichem Abstand zum Abdeckkörper fixierbar ist. Die Zapfen weisen dabei vorteilhaft einen quadratischen oder rechteckigen Querschnitt auf. Selbstverständlich kann aber auch der Zapfen einen Querschnitt anderer Form aufweisen.
Der Dekorkörper wird zweckmäßig so ausgebildet, dass er den Abdeckkörper nach der Zusammenmontage völlig abdeckt. Bei dem Abdeckkörper ist somit im Wesentlichen keinerlei besonderer Aufwand zur Oberflächenbearbeitung erforderlich.
Um die Oberfläche des Dekorkörpers durch die Ausbildung der Zapfen beispielsweise nicht zu beeinträchtigen, kann anstatt der einstückigen Ausbildung der Zapfen mit dem Dekorkörper auch ein Zwischenkörper oder eine Zwischenplatte vorgesehen sein, an der einstückig die Zapfen angeformt sind, wobei der Zwischenkörper dann beispielsweise durch einen Klebvorgang an dem Dekorkörper befestigt ist.
Der Dekorkörper kann sowohl eine geschlossene Oberfläche enthalten, als auch eine oder mehrere Durchtrittsöffnungen für Teile der Wasserarmatur aufweisen, wobei in diesem Falle auch entsprechende Öffnungen in dem Abdeckkörper und gegebenenfalls in dem Zwischenkörper ausgebildet sein müssen.

Ausführungsbeispiele der Erfindung sind in der Zeichnung dargestellt und werden im Folgenden näher beschrieben. Es zeigt in der Zeichnung
- Figur 1: eine Rosette, enthaltend einen Abdeckkörper und einen Dekorkörper in der Ansicht von der Installationswand aus;
- Figur 2: die in Figur 1 gezeigte Rosette in der Schnittebene II;
- Figur 3: den in Figur 1 gezeigten Abdeckkörper;
- Figur 4: den in Figur 3 gezeigten Abdeckkörper in der Schnittebene IV;
- Figur 5: den in Figur 1 gezeigten Dekorkörper;
- Figur 6: den in Figur 5 gezeigten Dekorkörper in der Schnittebene VI;
- Figur 7: eines der in Figur 1 gezeigten Federelemente in Perspektivansicht in vergrößerter Darstellung;
- Figur 8: das in Figur 7 gezeigte Federelement in der Ansicht von unten;
- Figur 9: das in Figur 7 gezeigte Federelement in Seitenansicht;
- Figur 10: das in Figur 9 gezeigte Federelement um 90° gedreht;
- Figur 11: einen anderen Dekorkörper im Längsschnitt;
- Figur 12: einen Zwischenkörper mit den angeformten Zapfen im Längsschnitt.

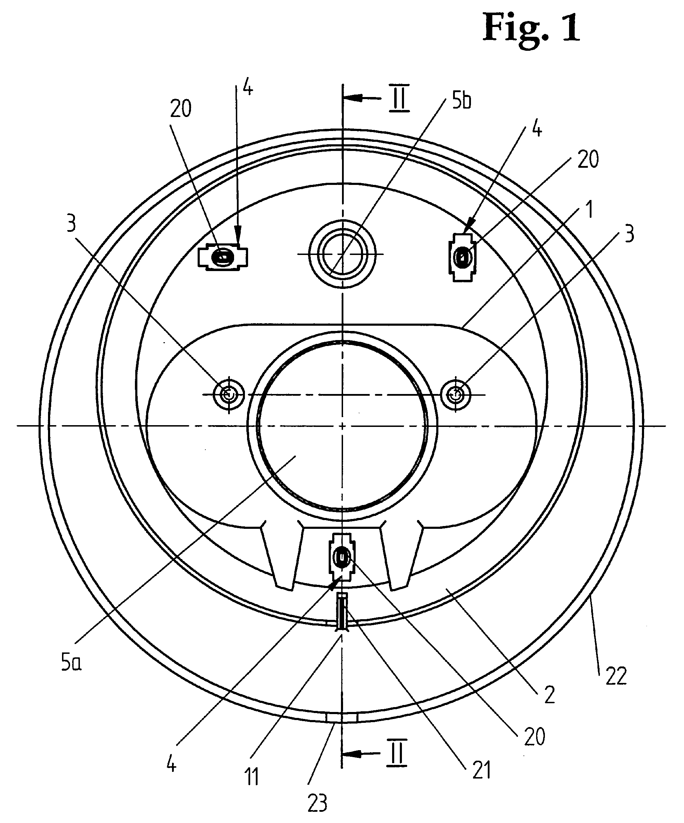

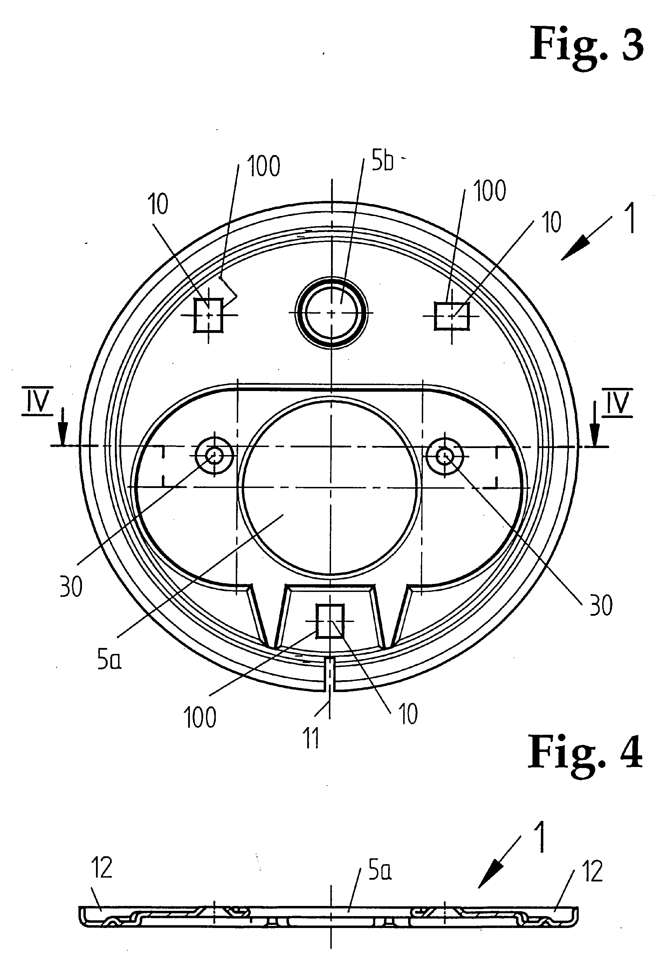

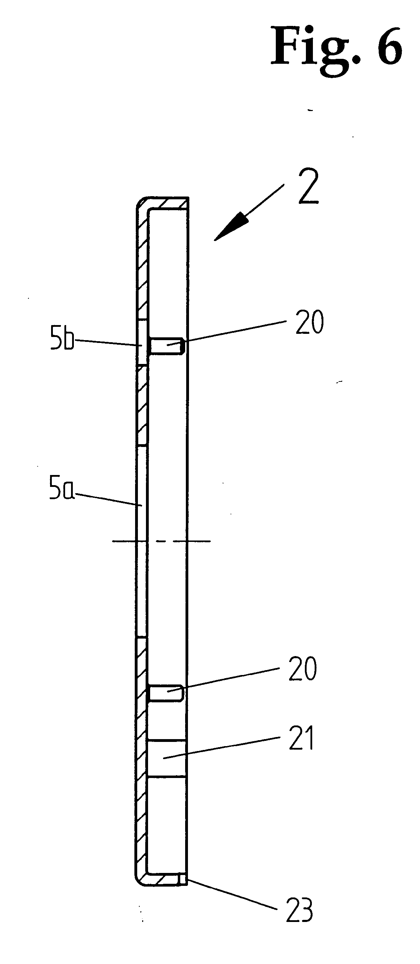

Der Einfachheit halber sind bei den Ausführungsbeispielen in der Zeichnung gleiche oder entsprechende Elemente mit jeweils gleichen Bezugszeichen versehen. Das in Figur 1 bis 10 in der Zeichnung dargestellte Ausführungsbeispiel enthält einen Abdeckkörper 1 und einen Dekorkörper 2 sowie drei Federelemente 4.
Der Abdeckkörper 1 ist tellerförmig ausgebildet und weist zwei mit Abstand angeordnete Durchtrittsöffnungen 5a, 5b auf, durch die in der Zeichnung nicht dargestellte Teile der Wasserarmatur in der Montagelage hindurchgreifen. An der Peripherie des Abdeckkörpers 1 ist an der der Installationswand (in der Zeichnung nicht dargestellt) zugekehrten Seite ein Ringraum 12 ausgebildet, wie es insbesondere aus Figur 4 der Zeichnung zu entnehmen ist. Der Ringraum 12 dient zur Aufnahme eines ebenfalls in der Zeichnung nicht dargestellten Dichtringes. Mit dem Dichtring erfolgt die Abdichtung zwischen der Installationswand und dem Abdeckkörper. In dem Abdeckkörper 1 sind zwei Bohrungen 30 für die Aufnahme von Schrauben 3 ausgebildet, mit denen der Abdeckkörper 1 an die in der Zeichnung nicht dargestellte Installationswand gedrückt wird. Außerdem sind in dem Abdeckkörper 1 drei mit Abstand zueinander angeordnete, im Querschnitt rechteckige Öffnungen 10 für die klammerartigen Federelemente 4 ausgebildet, wie es insbesondere aus Figur 3 der Zeichnung zu entnehmen ist. Hierbei sind zwei der Öffnungen 10 parallel zueinander angeordnet, während die dritte Öffnung 10 um 90° gedreht zu den andern angeordnet ist.

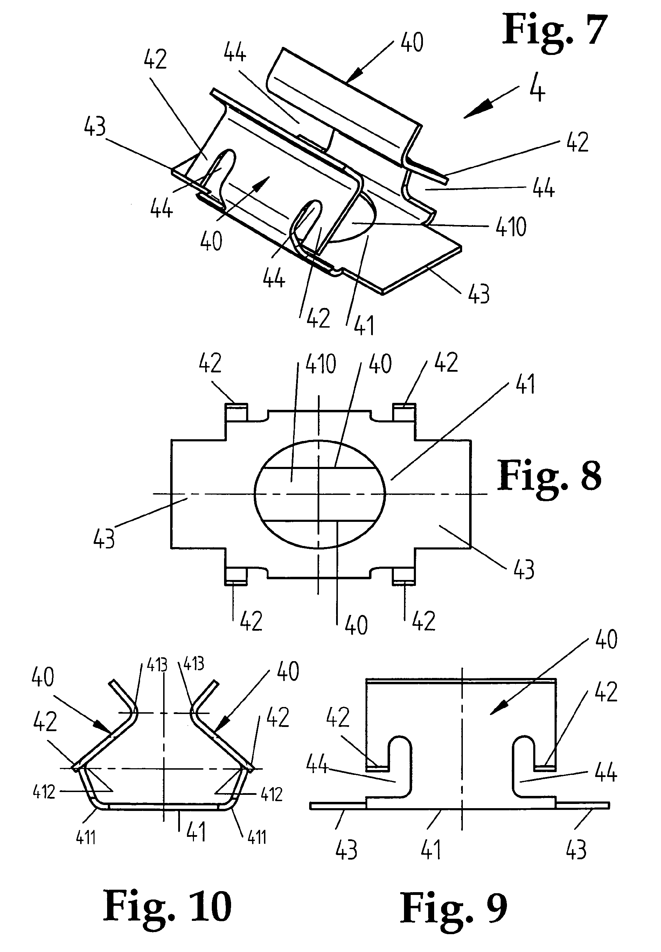

Das klammerartige Federelement 4, wie es insbesondere in Figur 7 bis 10 der Zeichnung dargestellt ist, ist aus nicht rostendem Stahl hergestellt und weist eine ebene Basisplatte 41 auf, mit der das Federelement 4 in der Stecklage im Bereich der Öffnung 10 des Abdeckkörpers 1 anliegt. Hierzu sind zwei gegenüberliegend angeordnete Lappen 43 an der Basisplatte 41 vorgesehen, die die Öffnung 10 in der Stecklage an der schmalen Seite jeweils überragen und die Einstecktiefe des Federelements 4 begrenzen. Parallel zu den beiden langen Seitenwänden 100 der Öffnung 10 ist an der Basisplatte 41 jeweils ein Federschenkel 40 ausgebildet. Jeder der beiden Federschenkel 40 weist dabei eine erste Krümmung 411 von etwa 60° zur Basisplatte 41 auf. Nach dem Erreichen der Dicke des Abdeckkörpers 1 erfolgt eine zweite Krümmung 412, derart, dass die beiden Krümmungen 412, 411 einen Gesamtwinkel von etwa 135° bilden. Am vorstehenden Endbereich jedes Federschenkels 40 erfolgt nochmals eine dritte Krümmung 413 um etwa 90° nach außen. Die Außenmantelfläche der Krümmung 413 bildet dabei eine Greiffläche für einen Zapfen 20 an dem Dekorkörper 2.
Im Bereich zwischen der ersten Krümmung 411 und der zweiten Krümmung 412 ist jeweils eine winkelförmige Ausnehmung 44 vorgesehen, wie es insbesondere aus Figur 9 der Zeichnung zu entnehmen ist. Mit Hilfe dieser Ausnehmung 44 wird jeweils eine federnde Rastnase 42 gebildet. Die federnden Rastnasen 42 sind dabei so angeordnet, dass sie das Federelement 4 in der Stecklage in dem Abdeckkörper 1 verriegeln. Beim Einsteckvorgang erfahren die federnden Rastnasen 42 eine entsprechende Auslenkung und federn danach in der Stecklage in ihre ursprüngliche Lage zurück und verriegeln damit das Federelement in dem Abdeckkörper 1 formschlüssig. Nur durch ein Auslenken der Rastnasen 42 aus ihrer Riegelposition kann das Federelement 4 aus der Öffnung 10 des Abdeckkörpers 1 wieder entfernt werden. Damit der Zapfen 20 auch durch das Federelement 4 hindurchgeführt werden kann, ist in der Bodenplatte 41 im Zentrum eine entsprechende Öffnung 410 ausgebildet.

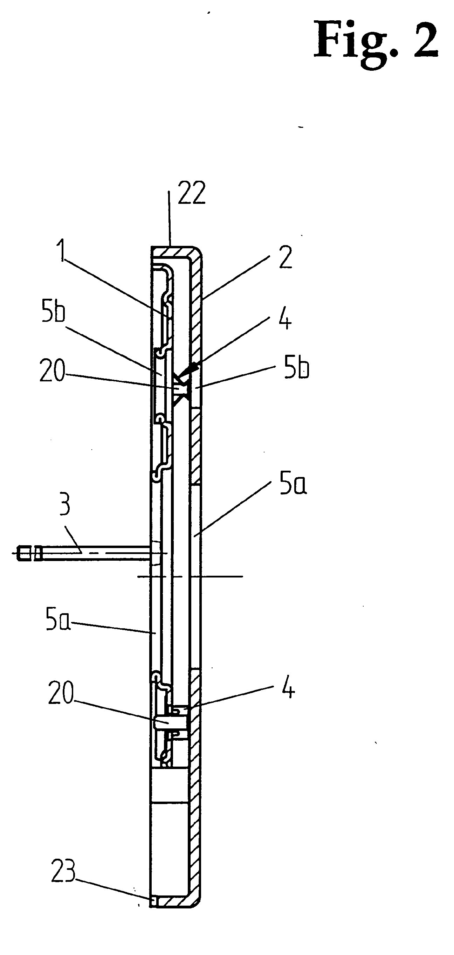

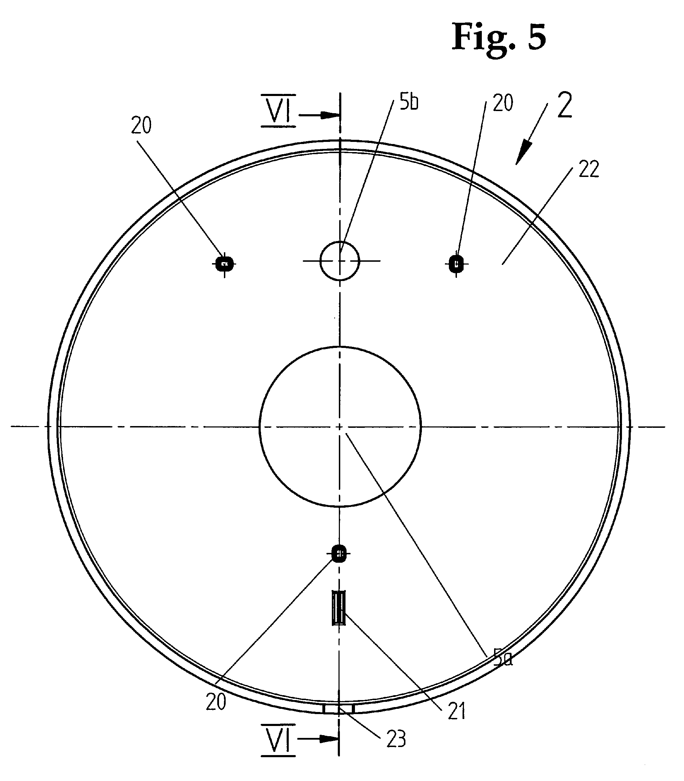

Der Dekorkörper 2 ist ebenfalls tellerförmig ausgebildet, wobei an der Peripherie ein auf die Installationswand gerichteter zylindrischer Mantel 22 angeformt ist, der in der Montagestellung den Abdeckkörper 1 umfasst, wie es insbesondere aus Figur 2 der Zeichnung zu entnehmen ist. Der Dekorkörper 2 hat dabei entsprechend der Anordnung der Öffnungen 10 im Abdeckkörper 1 drei angeformte Zapfen 20 mit einem rechteckigen Querschnitt, wie es insbesondere aus Figur 5 der Zeichnung zu entnehmen ist. Außerdem weist der Dekorkörper 2 entsprechend zu dem Abdeckkörper 1 zwei mit Abstand zueinander angeordnete Durchtrittsöffnungen 5a, 5b für Teile der in der Zeichnung nicht gezeigten Wasserarmatur auf.

Die Montage der Rosette an der Installationswand kann in folgender Weise erfolgen:
Zunächst wird der Abdeckkörper 1 mit den Federelementen 4 und dem in der Zeichnung nicht dargestellten Dichtring komplettiert. Der so komplettierte Abdeckkörper 1 wird mit seinen Durchtrittsöffnungen 5a, 5b auch die vorstehenden Teile der Wasserarmatur aufgeschoben. Sodann wird mit den Schrauben 3 der Abdeckkörper 1 gegen die Installationswand gepresst, so dass eine Abdichtung mit dem Dichtring erfolgt.
Anschließend wird der Dekorkörper 2 auf den Abdeckkörper 1 aufgeschoben. Zur Montageerleichterung ist hierbei ein Passsteg 21 an dem Dekorkörper 2 angeformt, der in der Stecklage in einen entsprechenden Passschlitz 11 des Abdeckkörpers 1 eingreift, so dass der Dekorkörper 2 nur in einer bestimmten Drehstellung auf den Abdeckkörper 1 aufgeschoben werden kann.
Sobald die Zapfen 20, deren Länge so bemessen ist, dass der Dekorkörper 2 in unterschiedlichem Abstand zum Abdeckkörper 1 fixierbar ist, die Krümmungen 413 der Federschenkel 40 erreichen, werden diese entsprechend federelastisch aufgeweitet und gelangen an der parallel zur Steckrichtung ausgebildeten Seitenfläche der im Querschnitt rechteckig ausgebildeten Zapfen 20 zur Anlage und sichern den Dekorkörper 2 durch Reibschluss in seiner Steckposition auf dem Abdeckkörper 1. Damit eventuell austretendes oder eindringendes Spritzwasser aus dem Bereich der Rosette abfließen kann, ist im unteren Bereich der Passschlitz 11 radial aus dem Abdeckkörper 1 herausgeführt. Außerdem weist der Mantel 22 am unteren Bereich einen entsprechenden Auslassschlitz 23 auf.
Der Reibschluss der Federelemente 4 auf den Zapfen 20 ist so ausgelegt, dass der Dekorkörper 2 stufenlos in der jeweils durch die Gegebenheiten der Installationswand bedingten Axialpositionen spannungsfrei verrastet ist. Die Verrastung ist dabei so ausgelegt, dass eine sichere Halterung in der Montageposition gewährleistet ist, andererseits aber der Dekorkörper, ohne dass die Gefahr einer Beschädigung auftritt, abgenommen und wieder aufgesetzt werden kann. Der Dekorkörper 2 ist so bemessen, dass er in der Stecklage den sichtbaren Bereich des Abdeckkörpers 1 abdeckt.

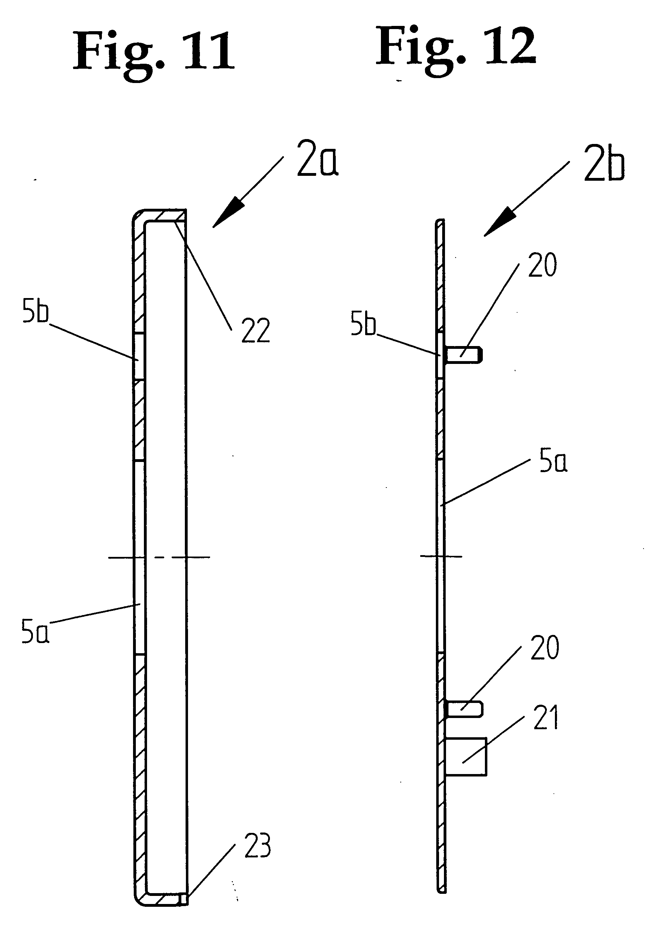

Bei dem Ausführungsbeispiel in Figur 11 und 12 ist ein abgewandelter Dekorkörper 2a dargestellt. Bei diesem Dekorkörper 2a sind die Zapfen 20 und der Passsteg 21 an einem ebenen Zwischenkörper 2b angeformt. Außerdem weißt der Zwischenkörper 2b die Durchtrittsöffnungen 5a, 5b entsprechend auf. Der Zwischenkörper 2b kann hierbei in den tellerförmigen Dekorkörper 2a an die von dem Mantel 22 umgebene Seite eingebracht und befestigt werden. Die Befestigung kann z. B. durch eine Klebung erfolgen. Mit dieser Ausbildung wird eine Beeinträchtigung der Oberfläche des Dekorkörpers 2a durch die Anformung der Zapfen 20 und des Passsteges 21 ausgeschlossen. Eine derartige Ausbildung kann z. B. vorteilhaft eingesetzt werden, wenn der Dekorkörper 2a aus Metall hergestellt ist.

## Patentansprüche

1. Rosette für Wasserarmaturen, insbesondere für Unterputzwasserarmaturen, welche aus einem Abdeckkörper (1) und einem Dekorkörper (2) besteht und bei der der Dekorkörper (2) mit wenigstens einem Zapfen (20) an dem Abdeckkörper (1) lösbar befestigt ist, wobei der Abdeckkörper (1) mit wenigstens einer Schraube (3) an einer Installationswand oder einer Wasserarmatur befestigt ist und die wenigstens eine Schraube (3) von dem Dekorkörper (2) verdeckt ist, **dadurch gekennzeichnet, dass** an dem Abdeckkörper (1) für jeweils einen Zapfen (20) ein klammerartiges Federelement (4) vorgesehen ist, das mit wenigstens einem Federschenkel (40) in der Stecklage an einer parallel zur Steckrichtung verlaufenden Seitenfläche des Zapfens (20) zur federnden Anlage gelangt und durch Reibschluss den Dekorkörper (2) in der jeweiligen Stecklage hält.

2. Rosette nach Anspruch 1, **dadurch gekennzeichnet, dass** das Federelement (4) zwei diametral gegenüberliegende Federschenkel (40) aufweist.

3. Rosette nach wenigstens einem der vorhergehenden Ansprüche, **dadurch gekennzeichnet, dass** das Federelement (4) als separates Teil ausgebildet ist und an dem Abdeckkörper (1) befestigt ist.

4. Rosette nach Anspruch 3, **dadurch gekennzeichnet, dass** das Federelement (4) in einer Öffnung (10) des Abdeckkörpers (1) lösbar befestigt ist.

5. Rosette nach Anspruch 4, **dadurch gekennzeichnet, dass** das Federelement (4) eine Basisplatte (41) aufweist, deren Querschnitt größer als die Öffnung (10) ist, wobei ein Federschenkel (40) oder mehrere Federschenkel (40) die Öffnung (10) in der Stecklage durchgreifen und wenigstens ein Federschenkel (40) eine federnde Rastnase (42) aufweist, die in der Stecklage an der der Basisplatte (41) gegenüberliegenden Stirnseite des Abdeckkörpers (1) zur Anlage gelangt und das Federelement (4) formschlüssig an dem Abdeckkörper (1) sichert.

6. Rosette nach Anspruch 5, **dadurch gekennzeichnet, dass** die Öffnung (10) einen quadratischen oder rechteckigen Querschnitt aufweist, wobei die Federschenkel (40) parallel zu einer Seitenwand (100) an dem Federelement (4) ausgebildet sind.

7. Rosette nach Anspruch 5 oder 6, **dadurch gekennzeichnet, dass** die Basisplatte (41) eine Öffnung (410) für den Durchtritt eines Zapfens (20) hat.

8. Rosette nach wenigstens einem der vorhergehenden Ansprüche 3 bis 7, **dadurch gekennzeichnet, dass** das Federelement (4) aus nichtrostendem Stahl hergestellt ist.

9. Rosette nach wenigstens einem der vorhergehenden Ansprüche, **dadurch gekennzeichnet, dass** an dem Dekorkörper (2) zwei oder drei Zapfen (20) vorgesehen sind, wobei die Zapfen (20) eine derartige Länge aufweisen, dass der Dekorkörper (2) mit unterschiedlichem Abstand zum Abdeckkörper (1) fixierbar ist.

10. Rosette nach wenigstens einem der vorhergehenden Ansprüche, **dadurch gekennzeichnet, dass** die Zapfen (20) einstückig an dem Dekorkörper (2) ausgebildet sind und einen quadratischen oder rechteckigen Querschnitt aufweisen.

11. Rosette nach wenigstens einem der vorhergehenden Ansprüche, **dadurch gekennzeichnet, dass** der Dekorkörper (2) den sichtbaren Bereich des an der Installationswand angeordneten Abdeckkörpers (1) völlig verdeckt.

12. Rosette nach wenigstens einem der vorhergehenden Ansprüche, **dadurch gekennzeichnet, dass** der Abdeckkörper (1) und der Dekorkörper (2) wenigstens eine Durchtrittsöffnung (5a, 5b) für einen Teil der Wasserarmatur hat.

13. Rosette nach wenigstens einem der vorhergehenden Ansprüche, **dadurch gekennzeichnet, dass** die Zapfen (20) an einem Zwischenkörper (2b) ausgebildet sind und der Zwischenkörper (2b) an der dem Abdeckkörper (1) zugekehrten Seite des Dekorkörpers (2a) befestigt ist.

14. Rosette nach Anspruch 13, **dadurch gekennzeichnet, dass** der Zwischenkörper (2b) an dem Dekorkörper (2a) angeklebt ist.
